# EUROPEAN PATENT SPECIFICATION

(11) **EP 3 688 340 B1**
(45) Date of publication and mention of the grant of the patent: **27.12.2023**
(21) Application number: 18862181.7
(22) Date of filing: 26.09.2018
(51) Int. Cl.: F16H 3/72, B60K 6/365, B60K 6/42

(54) **MULTI-MODE POWER SPLIT HYBRID TRANSMISSION WITH TWO PLANETARY GEAR MECHANISMS**
HYBRIDE ÜBERSETZUNG MIT MULTIMODALER LEISTUNGSTEILUNG MIT ZWEI PLANETENGETRIEBEMECHANISMEN
TRANSMISSION HYBRIDE À RÉPARTITION DE PUISSANCE MULTIMODE AVEC DEUX MÉCANISMES D'ENGRENAGES PLANÉTAIRES

(30) Priority: 28.09.2017 US 201762564576 P; 25.09.2018 US 201816140645
(43) Date of publication of application: 05.08.2020
(73) Proprietor: The Regents of The University of Michigan, Ann Arbor, MI 48109-2590 (US); Robert Bosch GmbH, 70442 Stuttgart (DE)
(72) Inventor: PAN, Ziheng, Canton, MI 48188 (US); PENG, Huei, Ann Arbor Michigan 48105 (US); JADE, Shyam, Plymouth Michigan 48170 (US); SCHWANKE, Jason, Southfield Michigan 48076 (US); THORINGTON, Matt, Farmington Hills Michigan 48331 (US); RAVI, Nikhil, Redwood City California 94061 (US); RILL, Viktor, San Jose California 95129 (US)
(74) Representative: Witte, Weller & Partner Patentanwälte mbB
(86) International application number: PCT/US2018/052970
(87) International publication number: WO 2019/067626

(56) References cited:
- WO-A1-2013/121527
- KR-B1- 100 803 533
- US-A1- 2006 046 886
- US-A1- 2007 287 564
- US-A1- 2010 227 722
- US-A1- 2011 319 211
- US-A1- 2012 178 573
- US-A1- 2012 316 021
- US-A1- 2012 322 601
- US-A1- 2014 296 013
- US-A1- 2015 024 893
- US-A1- 2017 136 867

## Description

### FIELD

The claimed invention relates to multi-mode, power-split hybrid transmission systems having two planetary gear mechanisms.

Document US 2011/0319211 A1 relates to a reconfigurable hybrid power train and discloses a multi-mode hybrid drive train offers selective operation in any one of series, parallel, and power split modes. The multi-mode hybrid drive train includes two planetary gear sets and a collection of specifically placed brakes and clutches relative to those gear sets. The first planetary gear train includes a power input for receiving power from a primary rotational power source, as well as a first sun gear, first carrier and first ring gear. The second planetary gear train similarly includes a power input as well as a second sun gear, a second carrier connected to a final drive, and a second ring gear. A first motor is linked to the first sun gear and a second motor is linked to the second sun gear such that selective activation of the clutches, brakes, and motors places the multi-mode hybrid drive train in a selected mode of operation.

Document US 2010/227722 A1 discloses an electrically-variable transmission for use with an engine includes an input member configured for operative interconnection with the engine, an output member, and a stationary member. First and second motor/generators, a first and a second planetary gear set each having respective first, second, and third members are included. A first, a second, and a third selectively engagable torque-transmitting mechanism are included. The input member is connectable for common rotation with the first member of the first planetary gear set either continuously or selectively by engagement of the third torque-transmitting mechanism. The output member is connected for common rotation with the first member of the second planetary gear set. The motor/generators are controllable and the torque-transmitting mechanisms are selectively engagable to establish at least one electric-only mode, a series mode, an output-split mode, and at least one neutral mode.

Document US 2014/296013 A1 discloses a hybrid vehicle driving device includes a first planetary gear mechanism, a second planetary gear mechanism, and a clutch, wherein a sun gear of the first planetary gear mechanism is connected to a first electric rotating machine, a carrier of the first planetary gear mechanism is connected to a driving wheel, a ring gear of the first planetary gear mechanism is connected to an engine, a sun gear of the second planetary gear mechanism is connected to a second electric rotating machine, the carrier of the second planetary gear mechanism is connected to the ring gear of the first planetary gear mechanism and the engine through the clutch, and a ring gear of the second planetary gear mechanism is connected to the driving wheel.

Document US 2006/046886 A1 discloses an electrically variable transmission including: an input member to receive power from an engine; an output member; first and second motor/generators; and first and second differentially geared planetary gear sets each having first, second and third gear members. The input member is continuously connected to the first member of the first planetary gear set, and the output member is continuously connected to the first member of the second planetary gear set. The first motor/generator is continuously connected to the second member of the first planetary gear set, and selectively connected to the second member of the second planetary gear set. The second motor/generator is continuously connected with the third member of the second planetary gear set. Five or six torque transfer devices selectively connect members of the planetary gear sets with each other or with ground. The torque transfer devices are engageable in combinations of two or three to provide five or six available fixed speed ratios.

Document US 2017/136867 A1 dislcoses a powertrain that includes a drive unit that can be modular and is adaptable to be used as an all-electric drive unit, an input power-split drive unit, or an input and compound power-split drive unit. The drive unit includes a first planetary gear set that has a sun gear member, a ring gear member, and a carrier member all rotatable about a first axis of rotation. The drive unit includes a first electric machine operable as a motor and having a rotor connected to rotate in unison with the sun gear member about the first axis of rotation. A first brake is selectively engageable to ground the ring gear member, a first clutch is operatively connected to the ring gear member, and an output member is connected to rotate in unison with the carrier member about the first axis of rotation. Multiple drive units can be used on a vehicle.

Document US 2007/287564 A1 discloses a power train for hybrid vehicles that increases the range of the transmission gear ratio within which the efficiency of the power train is superior. The method of operating the power train varies depending on the transmission gear ratio, and thus the power train can be operated with superior efficiency.

Document WO 2013/121527 A1 discloses a drive device for a hybrid vehicle comprising a first planetary gear mechanism, a second planetary gear mechanism, a clutch, and a brake. A first sun gear, which is the sun gear of the first planetary gear mechanism, is connected to a first rotary electric device. A first ring gear, which is the ring gear of the first planetary gear mechanism, is connected to an engine. A first carrier, which is the carrier of the first planetary gear mechanism, is connected to a second rotary element of the second planetary gear mechanism and to a drive wheel. A first rotary element of the second planetary gear mechanism is connected to a second rotary electric device. A third rotary element of the second planetary gear mechanism is connected to the engine and the first ring gear via the clutch. The first rotary element is the sun gear of the second planetary gear mechanism. The brake regulates the rotation of the third rotary element.

### BACKGROUND AND SUMMARY

This section provides background information related to the claimed invention which is not necessarily prior art. This section also provides a general summary of the invention, and is not a comprehensive disclosure of its full scope or all of its features.

A multi-mode, power-split hybrid transmission system according to claim 1 achieves 50% fuel consumption reduction compared to current conventional models. The claimed invention provides a transmission capable of delivering competitive performance while minimizing fuel consumption through power-split hybrid design.

The transmission system of the claimed invention consists of two planetary gear (PG) sets connected to one engine, two electric motors, one output shaft, and each other by several clutches, brakes, and direct connection elements. Depending on the specific location and actuation of the various clutch and brake elements, the entire powertrain can be run in one of several modes (e.g.: electric drive, power-split, parallel hybrid, series hybrid, electronic continuously variable transmission (eCVT), generator, neutral, etc.).

Acceleration and braking commands from the driver as understood in terms of driver demanded torque, and this torque demand is split among the drive elements (one engine and two electric motors) according to the specific mode the transmission is currently in. The transmission is to be configured and designed in such a way that the requested performance of the vehicle can be met while maintaining good fuel economy and respecting component limits. The chosen configurations are designed to satisfy or exceed the following targets: fuel efficiency, acceleration and transient performance, and control authority during mode switches.

Further areas of applicability will become apparent from the description provided herein. The description and specific examples in this summary are intended for purposes of illustration only and are not intended to limit the scope of the claimed invention.

### DRAWINGS

The drawings described herein are for illustrative purposes only of selected embodiments and not all possible implementations, and are not intended to limit the scope of the claimed invention.
FIGS. 1A-1B are schematic diagrams of a multi-mode, power-split hybrid transmission system according to a first example (Design I), which is not covered by the subject-matter of the claims;
FIG. 2 is a table illustrating the operating mode conditions for the first example;
FIG. 3 is an actuation schematic diagram of the multi-mode, power-split hybrid transmission system of FIGS. 1A-1B;
FIG. 4 is a schematic diagram of a multi-mode, power-split hybrid transmission system according to a second example (Design II), which is not covered by the subject-matter of the claims;
FIG. 5 is a table illustrating the operating mode conditions for the second example;
FIGS. 6A-6B are schematic diagrams of a multi-mode, power-split hybrid transmission system according to a third example which forms an embodiment of the claimed invention (Design III);
FIG. 7 is a table illustrating the operating mode conditions for the third example of the claimed invention;
FIG. 8 is an actuation schematic diagram of the multi-mode, power-split hybrid transmission system of FIGS. 6A-6B;
FIG. 9 is a schematic diagram of a multi-mode, power-split hybrid transmission system according to a fourth example of the claimed invention (Design IV);
FIG. 10 is a table illustrating the operating mode conditions for the fourth example of the claimed invention;
FIGS. 11A-11B are schematic diagrams of a multi-mode, power-split hybrid transmission system according to a fifth example of the present disclosure, which is not covered by the subject-matter of the claims (Design V);
FIG. 12 is a table illustrating the operating mode conditions for the fifth example of the present disclosure, which is not covered by the subject-matter of the claims;
FIG. 13 is an actuation schematic diagram of the multi-mode, power-split hybrid transmission system of FIGS. 11A-11B;
FIGS. 14A-14B are schematic diagrams of a multi-mode, power-split hybrid transmission system according to a sixth example of the present disclosure (Design VI), which is not covered by the subject-matter of the claims;
FIG. 15 is a table illustrating the operating mode conditions for the sixth example of the present disclosure, which is not covered by the subject-matter of the claims;
FIG. 16 is an actuation schematic diagram of the multi-mode, power-split hybrid transmission system of FIGS. 14A-14B;
FIG. 17 is a schematic diagram of a multi-mode, power-split hybrid transmission system according to a seventh example of the present disclosure (Design VII), which is not covered by the subject-matter of the claims;
FIG. 18 is a table illustrating the operating mode conditions for the seventh example of the present disclosure, which is not covered by the subject-matter of the claims;
FIG. 19 is a schematic diagram of a multi-mode, power-split hybrid transmission system according to an eighth example of the present disclosure (Design VIII), which is not covered by the subject-matter of the claims;
FIG. 20 is a table illustrating the operating mode conditions for the eighth example of the present disclosure, which is not covered by the subject-matter of the claims;
FIG. 21 is a schematic diagram of a multi-mode, power-split hybrid transmission system according to a ninth example of the present disclosure (Design IX), which is not covered by the subject-matter of the claims;
FIG. 22 is a table illustrating the operating mode conditions for the eighth example of the present disclosure, which is not covered by the subject-matter of the claims; and
FIG. 23 is an actuation schematic diagram of the multi-mode, power-split hybrid transmission system of FIG. 21.

Corresponding reference numerals indicate corresponding parts throughout the several views of the drawings.

### DETAILED DESCRIPTION

Example embodiments will now be described more fully with reference to the accompanying drawings. Example embodiments are provided so that this disclosure will be thorough, and will fully convey the scope to those who are skilled in the art. Numerous specific details are set forth such as examples of specific components, devices, and methods, to provide a thorough understanding of embodiments of the claimed invention. It will be apparent to those skilled in the art that specific details need not be employed, that example embodiments may be embodied in many different forms and that neither should be construed to limit the scope of the claimed invention. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the claimed invention of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

According to the principles of the claimed invention, as outlined herein, a multi-mode, power-split hybrid transmission system 10 is provided having an internal combustion engine (E, ICE) 20, a first electric motor (M, EM1) 22, a second electric motor or generator (G, EM2) 24, an output shaft or final drive (F, FD) 26, a first clutch element (C1) 28, a second clutch element (C2) 30, a third brake/clutch element (C3) 32, a fourth brake/clutch element (C4) 34, a first planetary gear mechanism (PG1) 36, and a second planetary gear mechanism (PG2) 38.

As will be appreciated from the following, the figures of the claimed invention illustrate the multi-mode, power-split hybrid transmission system 10 and, particularly, the operational constructions of how the engine 20, two electric motors 22, 24, and the final drive output shaft 26 are connected to the suns, carriers, and rings of the two planetary gear mechanisms 36, 38. The figures further illustrate the active elements (brake/clutches 28, 30, 32, 34) between the suns, carriers, and rings of the two planetary gear mechanisms 36, 38. Each embodiment is illustrated in two different visual styles.

The multi-mode, power-split hybrid transmission system 10 of the claimed invention may have various operating modes, including, but not limited to, power-split mode, pure electric mode, parallel hybrid mode, series hybrid mode, electronic continuously variable transmission (eCVT) mode, generator mode, neutral mode, and the like. Its operation can be optimized based on different environments.

It should be understood that the multi-mode, power-split hybrid transmission system 10 is particularly adapted to be incorporated and used in trucks or other vehicle. Various combinations of the active elements (clutches and brakes) can be actuated to set the two planetary gear mechanism transmission in specific modes. This is shown for each embodiment in the mode selection table associated therewith.

### Description of a First Example (Configuration A - Design I), which is not covered by the subject-matter of the claims

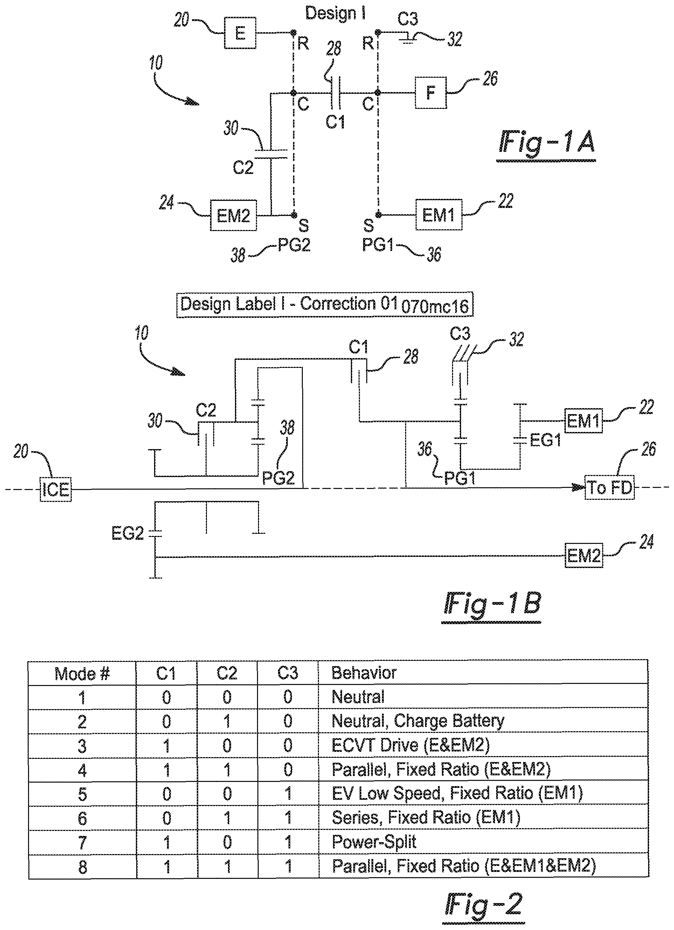

In some examples, which are not covered by the subject-matter of the claims, as illustrated in FIG. 1, multi-mode, power-split hybrid transmission system 10 comprises the engine 20 operably connected to the ring gear of the second planetary gear mechanism 38, while first electric motor 22 is connected to the sun gear of the first planetary gear mechanism 36 and second electric motor 24 is connected to the sun gear of the second planetary gear mechanism 38.

The first clutch element (C1) 28 collocates with the carrier of the first planetary gear mechanism 36 and the carrier of the second planetary gear mechanism 38. The second clutch element (C2) 30 collocates with the carrier of the second planetary gear mechanism 38 and the sun gear of the second planetary gear mechanism 38. The third clutch/brake element (C3) 32 collocates with the ring gear of the first planetary gear mechanism 36. The carrier of the first planetary gear mechanism 36 outputs to the final drive 26.

In some examples, which are not covered by the subject-matter of the claims, as illustrated in FIG. 2, multi-mode, power-split hybrid transmission system 10 employs different operating modes that can be selected by engaging or disengaging clutches of first clutch element (C1) 28 and second clutch element (C2) 30, and third brake/clutch element (C3) 32. As can be seen, the operating modes available in Design 94 are neutral, neutral / charge battery, eCVT (electronic continuously variable transmission), parallel hybrid, EV (electric vehicle), series hybrid, and power-split (FIG. 2).

The First Example employs a neutral mode if first clutch element (C1) 28, second clutch element (C2) 30, and third brake/clutch element (C3) 32 are disengaged. The First Example employs a neutral / charge battery mode if first clutch element (C1) 28 and third brake/clutch element (C3) 32 are disengaged, and second clutch element (C2) 30 is engaged. The First Example employs an eCVT mode if second clutch element (C2) 30 and third brake/clutch element (C3) 32 are disengaged, and first clutch element (C1) 28 is engaged. The First Example employs a fixed ratio parallel mode if first clutch element (C1) 28 and second clutch element (C2) 30 are engaged, and third brake/clutch element (C3) 32 is disengaged. The First Example employs an EV fixed ratio mode if first clutch element (C1) 28 and second clutch element (C2) 30 are disengaged, and third brake/clutch element (C3) 32 is engaged. The First Example employs a fixed ratio series mode if second clutch element (C2) 30 and third brake/clutch element (C3) 32 are engaged, and first clutch element (C1) 28 is disengaged. The First Example employs a power-split mode if first clutch element (C1) 28 and third brake/clutch element (C3) 32 are engaged, and second clutch element (C2) 30 is disengaged. Finally, the First Example employs a fixed ratio, parallel motor and generator mode if first clutch element (C1) 28, second clutch element (C2) 30, and third brake/clutch element (C3) 32 are engaged.

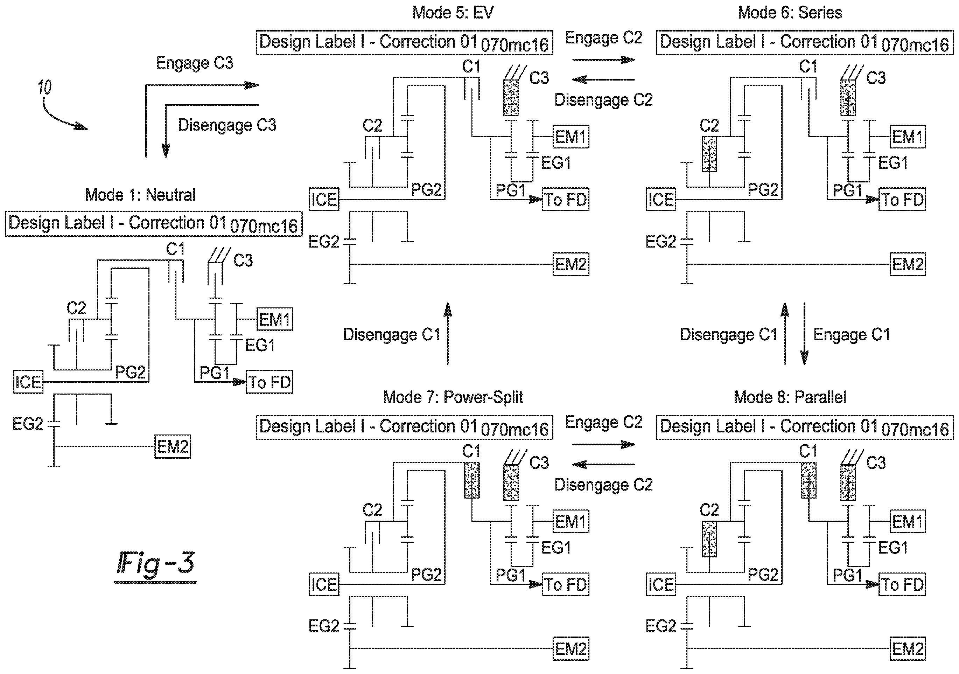

In some examples, which is are covered by the subject-matter of the claims, as illustrated in FIG. 3, the particular operating mode can be selected through the actuation of one or more of the first clutch element (C1) 28, second clutch element (C2) 30, and third brake/clutch element (C3) 32. The actuation paths are illustrated in FIG. 3. The desired operating mode will be selected by a supervisory controller that balances fuel economy, performance, and drivability.

### Description of a Second Example (Configuration B - Design II), which is not covered by the subject-matter of the claims

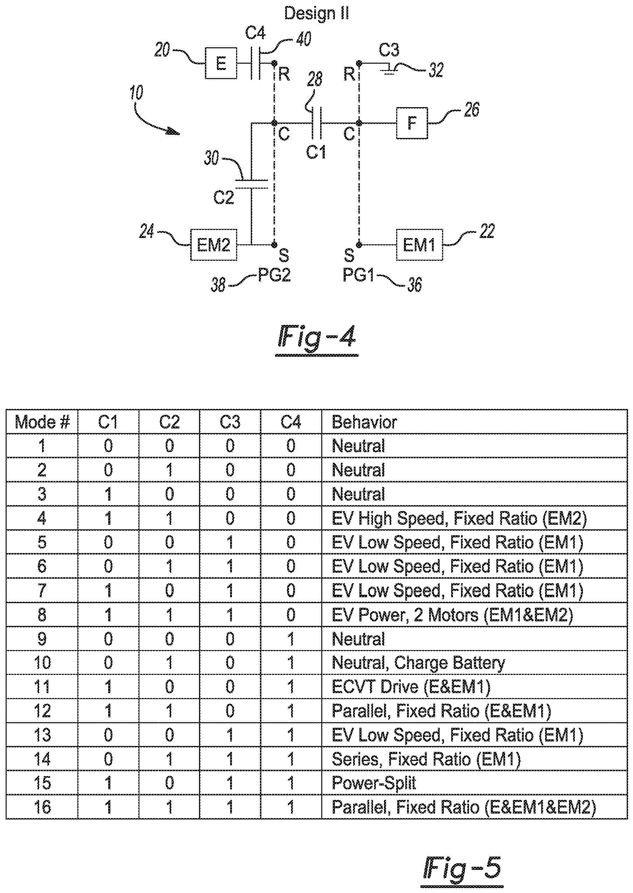

In some examples, which are not covered by the subject-matter of the claims, as illustrated in FIG. 4, multi-mode, power-split hybrid transmission system 10 can further comprise a fourth clutch element (C4) 40 operably coupled between the engine 20 and the ring gear of second planetary gear mechanism 38. This embodiment, which is not covered by the subject-matter of the claims, can be operated in various modes as illustrated in FIG. 5. That is, the present embodiment, which is not covered by the subject-matter of the claims, employs different operating modes that can be selected by engaging or disengaging first clutch element (C1) 28, second clutch element (C2) 30 and third clutch element (C3) 40, third brake/clutch element (C3) 32, and fourth clutch element (C4) 40. Operating modes 9-16 of FIG. 5 illustrate modes in which fourth clutch element (C4) 40 is engaged and, thus, are the same as operating modes 1-8 of FIG. 2. As can be seen, the operating modes available in the present embodiment (Design II) are neutral, parking brake, eCVT, parallel hybrid, series hybrid, EV (low speed, high speed, and power), and power-split (FIG. 5).

### Description of a Third Example forming an embodiment of the claimed invention (Configuration C - Design III)

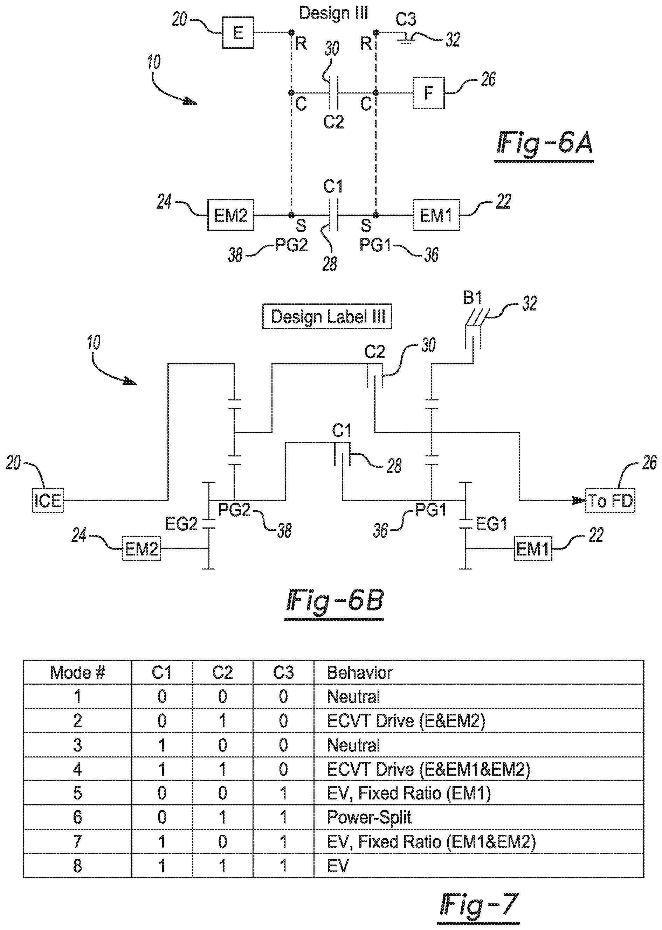

In some embodiments, as illustrated in FIG. 6, multi-mode, power-split hybrid transmission system 10 comprises the engine 20 operably connected to the ring gear of the second planetary gear mechanism 38, while first electric motor 22 is operably connected to the sun gear of the first planetary gear mechanism 36 and second electric motor 24 is connected to the sun gear of the second planetary gear mechanism 38.

The first clutch element (C1) 28 collocates with the sun gear of the first planetary gear mechanism 36 and the sun gear of the second planetary gear mechanism 38. The second clutch element (C2) 30 collocates with the carrier of the first planetary gear mechanism 36 and the carrier of the second planetary gear mechanism 38. Third brake/clutch element (C3) 32 collocates with the ring gear of the first planetary gear mechanism 36. The carrier of the first planetary gear mechanism 36 outputs to the final drive 26.

In some embodiments, as illustrated in FIG. 7, multi-mode, power-split hybrid transmission system 10 employs different operating modes that can be selected by engaging or disengaging clutches of first clutch element (C1) 28 and second clutch element (C2) 30, and third brake/clutch element (C3) 32. As can be seen, the operating modes available in Design III are neutral, neutral / charge battery, eCVT (electronic continuously variable transmission), parallel hybrid, EV (electric vehicle), and power-split (FIG. 7).

The Third Example employs a neutral mode if first clutch element (C1) 28, second clutch element (C2) 30, and third brake/clutch element (C3) 32 are disengaged. The Third Example employs an eCVT drive (E&EM2) mode if first clutch element (C1) 28 and third brake/clutch element (C3) 32 are disengaged, and second clutch element (C2) 30 is engaged. The Third Example employs a neutral mode if second clutch element (C2) 30 and third brake/clutch element (C3) 32 are disengaged, and first clutch element (C1) 28 is engaged. The Third Example employs an eCVT drive (E&EM1&EM2) mode if first clutch element (C1) 28 and second clutch element (C2) 30 are engaged, and third brake/clutch element (C3) 32 is disengaged. The Third Example employs an EV fixed ratio mode if first clutch element (C1) 28 and second clutch element (C2) 30 are disengaged, and third brake/clutch element (C3) 32 is engaged. The Third Example employs a power-split mode if second clutch element (C2) 30 and third brake/clutch element (C3) 32 are engaged, and first clutch element (C1) 28 is disengaged. The Third Example employs a fixed ratio EV (EM1&EM2) mode if first brake element (B1) 32 and third brake/clutch element (C3) 32 are engaged, and second clutch element (C2) 30 is disengaged. Finally, the Third Example employs an EV mode if first clutch element (C1) 28, second clutch element (C2) 30, and third brake/clutch element (C3) 32 are engaged.

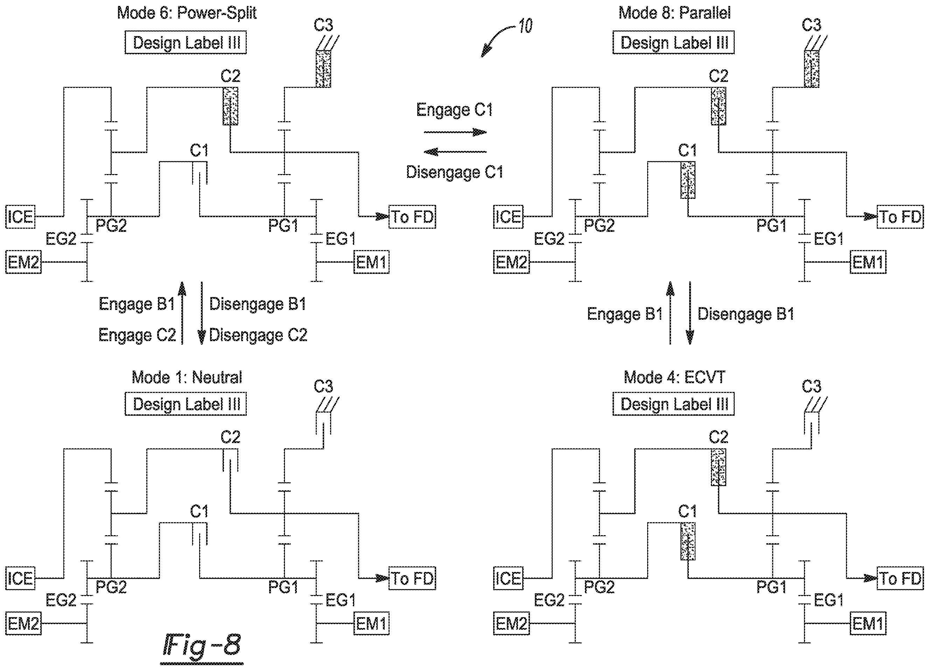

In some embodiments, as illustrated in FIG. 8, the particular operating mode can be selected through the actuation of one or more of the first clutch element (C1) 28, second clutch element (C2) 30, and third brake/clutch element (C3) 32. The actuation paths are illustrated in FIG. 8. The desired operating mode will be selected by a supervisory controller that balances fuel economy, performance, and drivability.

### Description of a Fourth Example forming an alternative embodiment of the claimed invention (Configuration D - Design IV)

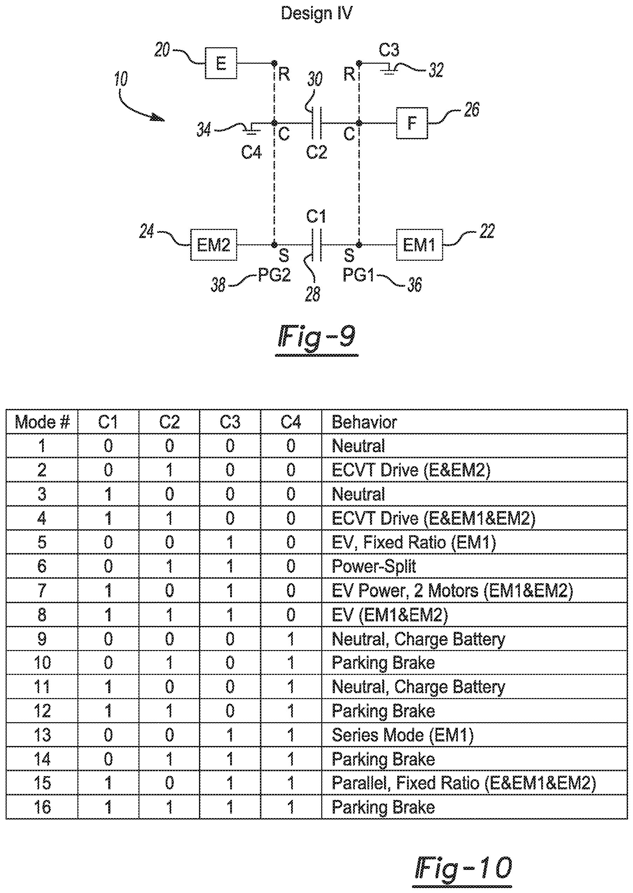

In some embodiments, as illustrated in FIG. 9, multi-mode, power-split hybrid transmission system 10 can further comprise a fourth brake/clutch element (C4) 34 operably coupled to the carrier of second planetary gear mechanism 38. This embodiment can be operated in various modes as illustrated in FIG. 10. That is, the present embodiment employs different operating modes that can be selected by engaging or disengaging first clutch element (C1) 28, second clutch element (C2) 30, third brake/clutch element (C3) 32 and fourth brake/clutch element (C4) 34. Operating modes 9-16 of FIG. 10 illustrate modes in which fourth brake/clutch (C4) 34 is engaged and, thus, are the same as operating modes 1-8 of FIG. 7. As can be seen, the operating modes available in the present embodiment (Design IV) are neutral, parking brake, eCVT, parallel hybrid, series hybrid, EV (low speed, high speed, and power), and power-split (FIG. 10).

### Description of a Fifth Example (Configuration E - Design V), which is not covered by the subject-matter of the claims

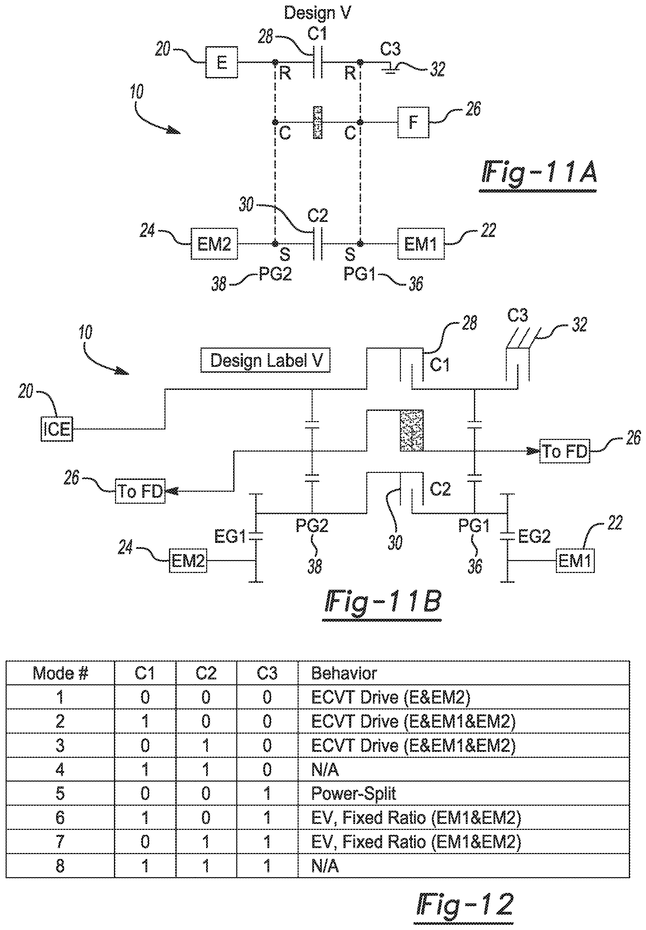

In some examples, which are not covered by the subject-matter of the claims, as illustrated in FIGS. 11A-11B, multi-mode, power-split hybrid transmission system 10 comprises the engine 20 operably connected to the ring gear of the second planetary gear mechanism 38, while first electric motor 22 is operably connected to the sun gear of the first planetary gear mechanism 36 and second electric motor 24 is operably connected to the sun gear of the second planetary gear mechanism 38.

The first clutch element (C1) 28 collocates with the ring gear of the first planetary gear mechanism 36 and the ring gear of the second planetary gear mechanism 38. The second clutch element (C2) 30 collocates with the sun gear of the first planetary gear mechanism 36 and the sun gear of the second planetary gear mechanism 38. Third brake/clutch element (C3) 32 collocates with the ring gear of the first planetary gear mechanism 36. The carrier of the first planetary gear mechanism 36 is permanently coupled to the carrier of the second planetary gear mechanism 38. The carrier of the first planetary gear mechanism 36 outputs to the final drive 26.

In some examples, which is not covered by the subject-matter of the claims, as illustrated in FIG. 12, multi-mode, power-split hybrid transmission system 10 employs different operating modes that can be selected by engaging or disengaging clutches of first clutch element (C1) 28 and second clutch element (C2) 30, and third brake/clutch element (C3) 32. As can be seen, the operating modes available in Design V are eCVT, EV, and power-split (FIG. 12).

The Fifth Example employs an eCVT drive (E&M) mode if first clutch element (C1) 28, second clutch element (C2) 30, and third brake/clutch element (C3) 32 are disengaged. The Fifth Example employs an eCVT drive (E&EM1&EM2) mode if second clutch element (C2) 30 and third brake/clutch element (C3) 32 are disengaged, and first clutch element (C1) 28 is engaged. The Fifth Example employs an eCVT drive (E&EM1&EM2) mode if first clutch element (C1) 28 and third brake/clutch element (C3) 32 are disengaged, and second clutch element (C2) 30 is engaged. The Fifth Example employs a power split mode if first clutch element (C1) 28 and second clutch element (C2) 30 are disengaged, and third brake/clutch element (C3) 32 is engaged. The Fifth Example employs an EV fixed ratio mode if first clutch element (C1) 28 and third brake/clutch element (C3) 32 are engaged, and second clutch element (C2) 30 is disengaged. The Fifth Example employs another EV fixed ratio mode if second clutch element (C2) 30 and third brake/clutch element (C3) 32 are engaged, and first clutch element (C1) 28 is disengaged.

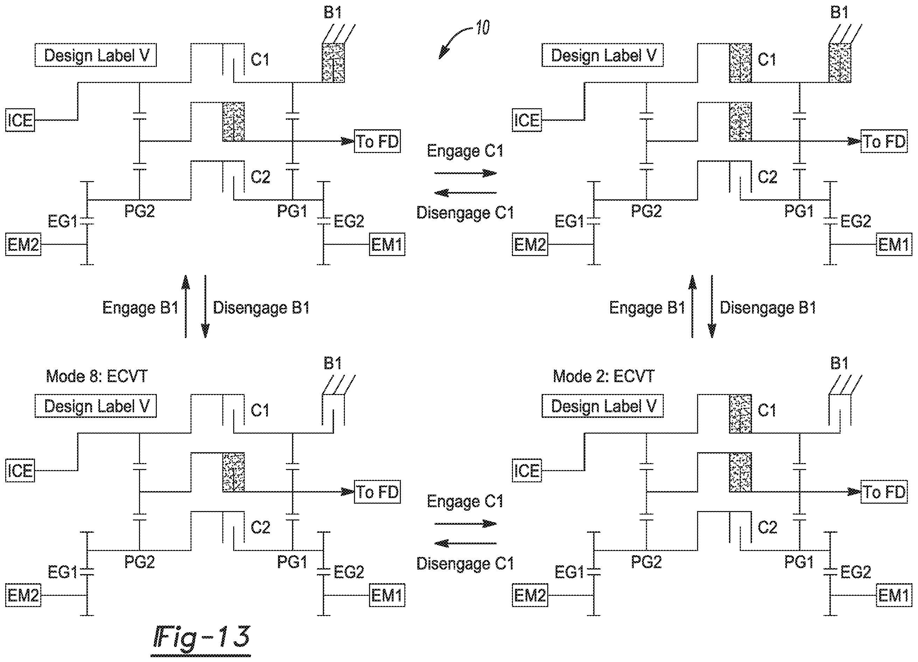

In some examples, which are not covered by the subject-matter of the claims, as illustrated in FIG. 13, the particular operating mode can be selected through the actuation of one or more of the first clutch element (C1) 28, second clutch element (C2) 30, and the third brake/clutch element (C3) 32. The actuation paths are illustrated in FIG. 13. The desired operating mode will be selected by a supervisory controller that balances fuel economy, performance, and drivability.

### Description of a Sixth Example forming an example (Configuration E - Design VI), which is not covered by the subject-matter of the claims

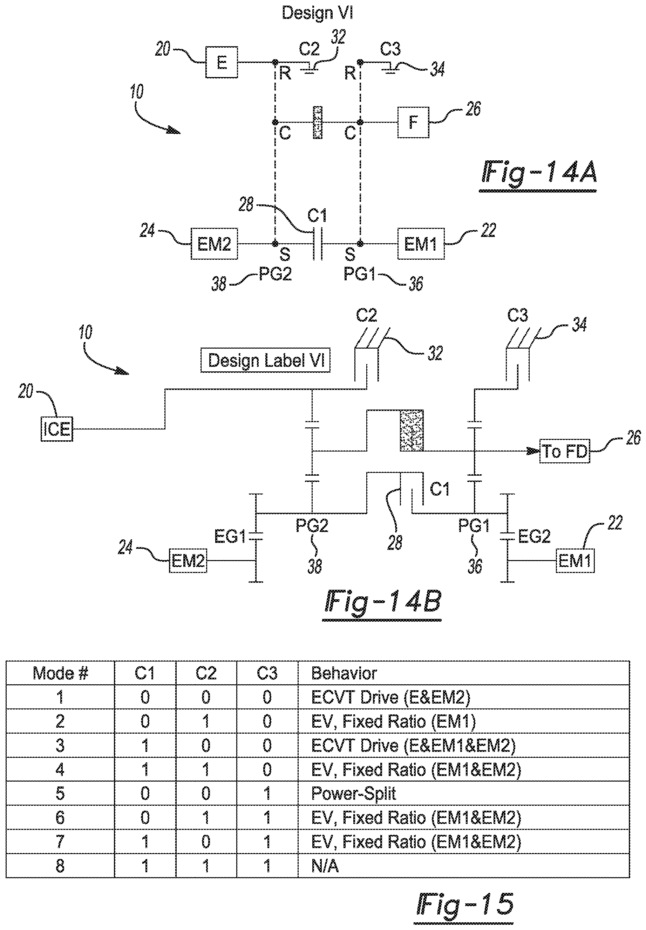

In some examples, which are not covered by the subject-matter of the claims, as illustrated in FIG. 14, multi-mode, power-split hybrid transmission system 10 comprises the engine 20 operably connected to the ring gear of the second planetary gear mechanism 38, while first electric motor 22 is connected to the sun gear of the first planetary gear mechanism 36 and second electric motor 24 is connected to the sun gear of the second planetary gear mechanism 38.

The first clutch element (C1) 28 collocates with the sun gear of the first planetary gear mechanism 36 and the sun gear of the second planetary gear mechanism 38. Third brake/clutch element (C3) 34 collocates with the ring gear of the first planetary gear mechanism 36. Second brake/clutch element (C2) 32 collocates with the ring gear of the second planetary gear mechanism 38. The carrier of the first planetary gear mechanism 36 is permanently coupled to the carrier of the second planetary gear mechanism 38. The carrier of the first planetary gear mechanism 36 outputs to the final drive 26.

In some embodiments, which are not covered by the subject-matter of the claims, as illustrated in FIG. 15, multi-mode, power-split hybrid transmission system 10 employs different operating modes that can be selected by engaging or disengaging clutches of first clutch element (C1) 28, second brake/clutch element (C2) 3 and third brake/clutch element (C3) 34. As can be seen, the operating modes available in Design VI are eCVT, EV, parallel hybrid, and power-split (FIG. 15). Attention is directed to FIG. 15 for an illustration of the engaged position (1) and disengaged position (0) of first clutch element (C1) 28, and second brake/clutch element (C2) 32 and third brake/clutch element (C3) 34 and the associated operating mode.

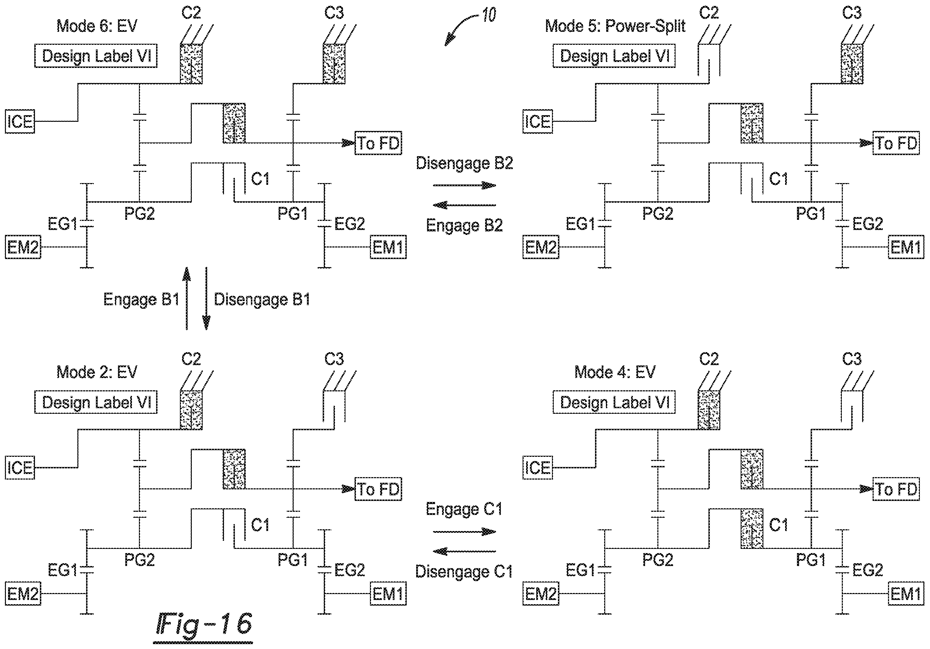

In some embodiments, which are not covered by the subject-matter of the claims, as illustrated in FIG. 16, the particular operating mode can be selected through the actuation of one or more of the first clutch element (C1) 28, second brake/clutch element (C2) 32, and third brake/clutch element (C3) 34. The actuation paths are illustrated in FIG. 16. The desired operating mode will be selected by a supervisory controller that balances fuel economy, performance, and drivability.

### Description of a Seventh Example (Configuration G - Design VII), which is not covered by the subject-matter of the claims

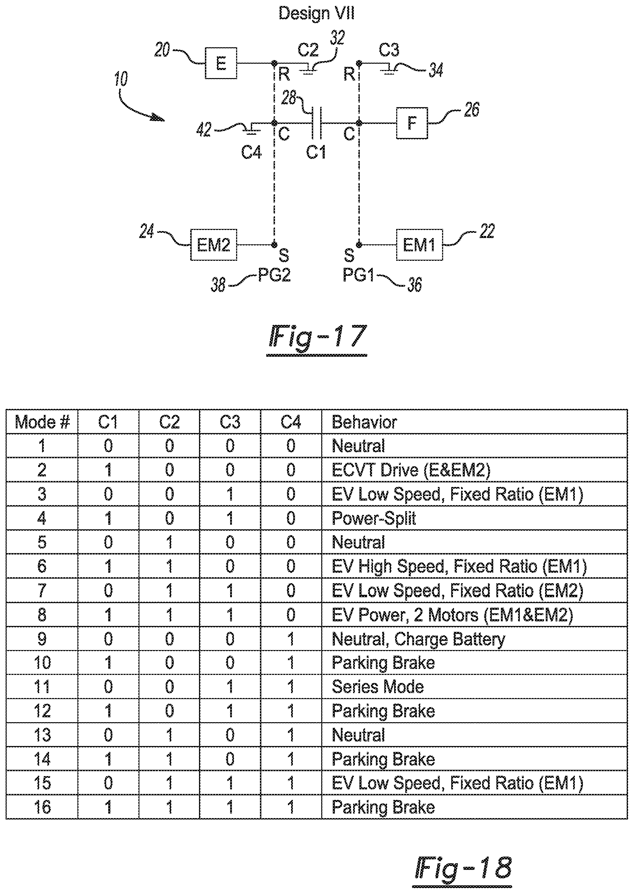

In some examples, which are not covered by the subject-matter of the claims, as illustrated in FIG. 17, multi-mode, power-split hybrid transmission system 10 can comprise a variation of the embodiment of FIGS. 14-16, wherein first clutch element (C1) 28 is removed from between the sun gear of the first planetary gear mechanism 36 and the sun gear of the second planetary gear mechanism 38. First clutch element (C1) 28 then replaces the permanent connection between the carrier of the first planetary gear mechanism 36 and the carrier of the second planetary gear mechanism 38. Finally, a fourth brake/clutch element (C4) collocates with the carrier of second planetary gear mechanism 38.

This embodiment, which is not covered by the subject-matter of the claims, can be operated in various modes as illustrated in FIG. 18. That is, the present embodiment, which is not covered by the subject-matter of the claims, employs different operating modes that can be selected by engaging or disengaging first clutch element (C1) 28, second brake/clutch element (C2) 32, third brake/clutch element (C3) 34, and fourth brake/clutch element (C4) 42. As can be seen, the operating modes available in the present embodiment (Design VII) are neutral, parking brake, eCVT, parallel hybrid, series hybrid, EV (low speed, high speed, and power), and power-split (FIG. 18).

### Description of an Eighth Example (Configuration H - Design VIII), which is not covered by the subject-matter of the claims

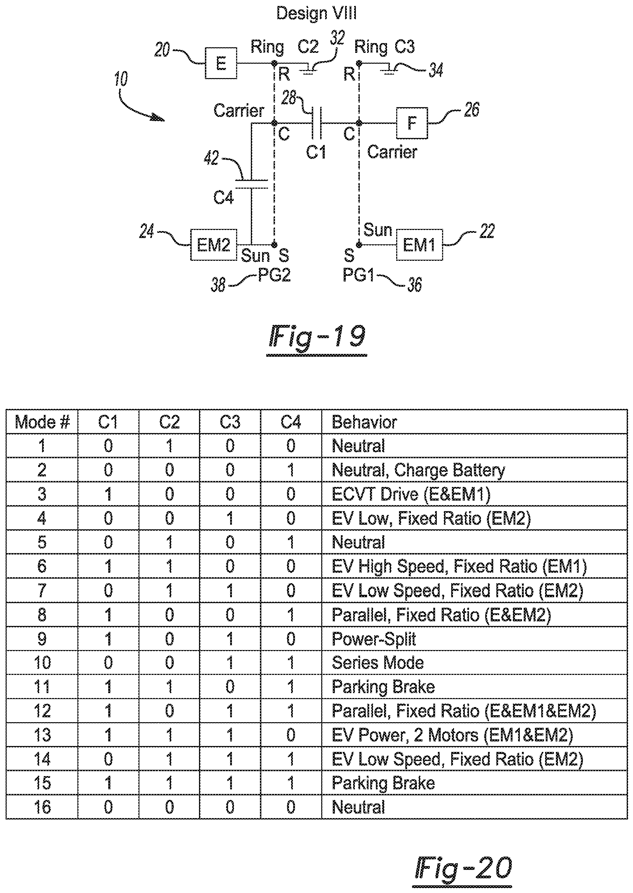

In some examples, which are not covered by the subject-matter of the claims, as illustrated in FIG. 19, multi-mode, power-split hybrid transmission system 10 can comprise a variation of the embodiment of FIGS. 14-16, wherein first clutch element (C1) 28 is removed from between the sun gear of the first planetary gear mechanism 36 and the sun gear of the second planetary gear mechanism 38. First clutch element (C1) 28 then replaces the permanent connection between the carrier of the first planetary gear mechanism 36 and the carrier of the second planetary gear mechanism 38. Finally, a fourth clutch element (C4) 42 collocates with the carrier of second planetary gear mechanism 38 and the sun gear of the second planetary gear mechanism 38.

This embodiment, which is not covered by the subject-matter of the claims, can be operated in various modes as illustrated in FIG. 20. That is, the present embodiment, which is not covered by the subject-matter of the claims, employs different operating modes that can be selected by engaging or disengaging first clutch element (C1) 28, second clutch element (C2) 32, and third brake/clutch element (C3) 34 and fourth clutch element (C4). As can be seen, the operating modes available in the present embodiment (Design VIII) are neutral, parking brake, eCVT, parallel hybrid, series hybrid, EV (low speed, high speed, and power), and power-split (FIG. 20).

### Description of a Ninth Example (Configuration E - Design IX), which is not covered by the subject-matter of the claims

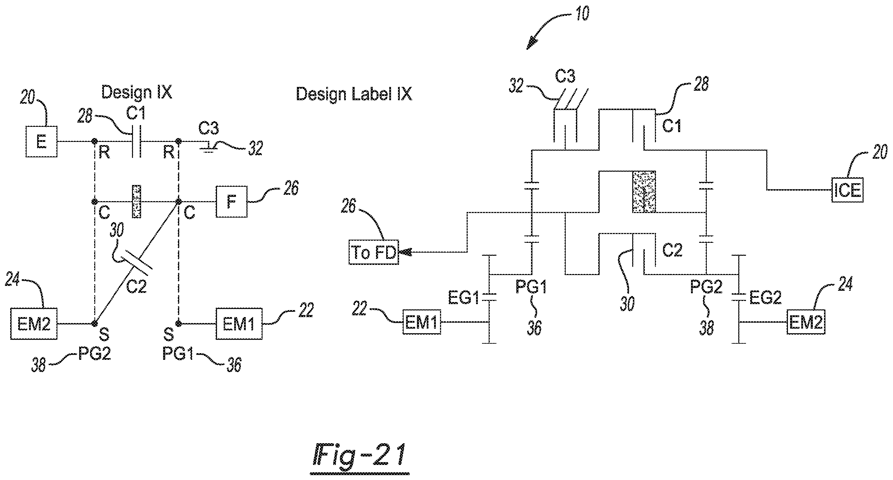

In some examples, which are not covered by the subject-matter of the claims, as illustrated in FIG. 21, multi-mode, power-split hybrid transmission system 10 comprises the engine 20 operably connected to the ring gear of the second planetary gear mechanism 38, while first electric motor 22 is connected to the sun gear of the first planetary gear mechanism 36 and second electric motor 24 is connected to the sun gear of the second planetary gear mechanism 38.

The first clutch element (C1) 28 collocates with the ring gear of the first planetary gear mechanism 36 and the ring gear of the second planetary gear mechanism 38. The second clutch element (C2) 30 collocates with the carrier of the first planetary gear mechanism 36 and the sun gear of the second planetary gear mechanism 38. Third brake/clutch element (C3) 32 collocates with the ring gear of the first planetary gear mechanism 36. The carrier of the first planetary gear mechanism 36 is permanently coupled to the carrier of the second planetary gear mechanism 38. The carrier of the first planetary gear mechanism 36 outputs to the final drive 26.

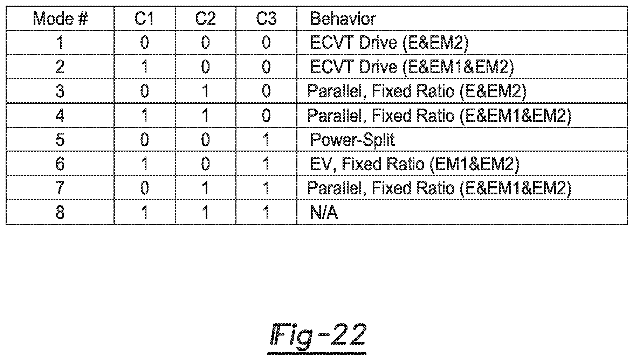

In some examples, which are not covered by the subject-matter of the claims, as illustrated in FIG. 22, multi-mode, power-split hybrid transmission system 10 employs different operating modes that can be selected by engaging or disengaging clutches of first clutch element (C1) 28 and second clutch element (C2) 30, and third brake/clutch element (C3) 32. As can be seen, the operating modes available in Design IX are eCVT, EV, parallel hybrid, and power-split (FIG. 22). Attention is directed to FIG. 22 for an illustration of the engaged position (1) and disengaged position (0) of first clutch element (C1) 28, second clutch element (C2) 30, and third brake/clutch element (C3) 32 and the associated operating mode.

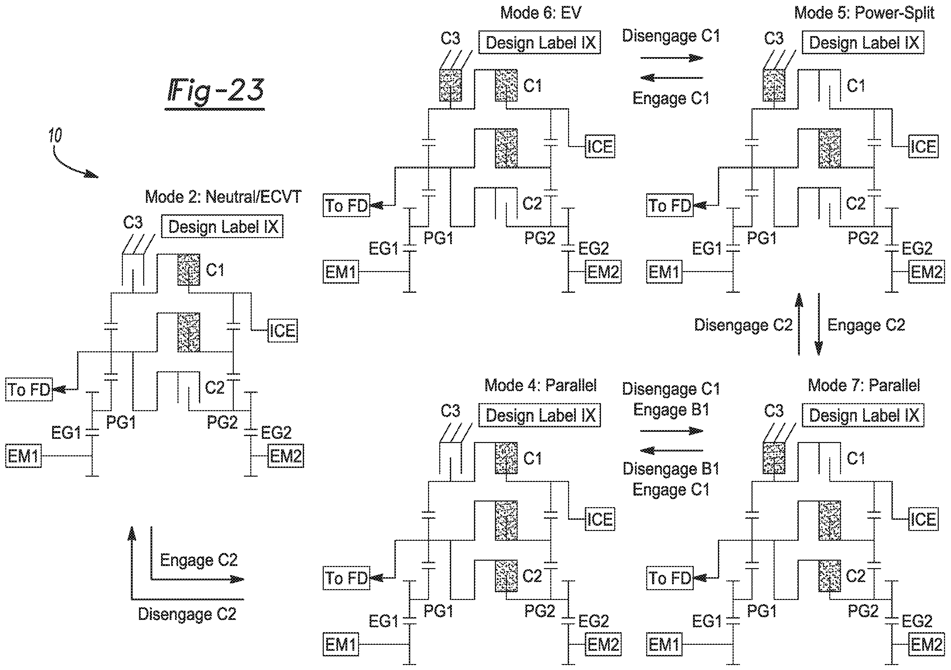

In some examples, which are not covered by the subject-matter of the claims, as illustrated in FIG. 23, the particular operating mode can be selected through the actuation of one or more of the first clutch element (C1) 28, second clutch element (C2) 30, and third brake/clutch element (C3) 32. The actuation paths are illustrated in FIG. 23. The desired operating mode will be selected by a supervisory controller that balances fuel economy, performance, and drivability.

It should be understood that any of the disclosed embodiments of the claimed invention can include exchanging the placement of the first electric motor with the second electric motor. Moreover, the power level of the engine, the first electric motor and the second electric motor can vary based on different implementation purposes. Similarly, the gear ratio of the first planetary gear mechanism and the second planetary gear mechanism can vary based on different implementation purposes. Finally, it should be understood that there can be external gear ratios between the placement of components (the engine, the first electric motor and the second electric motor) and the planetary gear mechanism (first planetary gear mechanism and second planetary gear mechanism) based on different implementation purposes.

The foregoing description of the embodiments has been provided for purposes of illustration and description. It is not intended to be exhaustive or to limit the claimed invention. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the claimed invention, and all such modifications are intended to be included within the scope of the claimed invention as defined by the appended claims.

## Claims

1. A multi-mode, power-split hybrid transmission system comprising:
an internal combustion engine (20) outputting a driving force;
a first electric motor (22) outputting a driving force;
a second electric motor (24) outputting a driving force;
a first planetary gear mechanism (36) having a carrier, a ring gear, and a sun gear, the first planetary gear mechanism being operably coupled to at least one of the internal combustion engine, the first electric motor, and the second electric motor to transmit the driving force;
a second planetary gear mechanism (38) having a carrier, a ring gear, and a sun gear, the second planetary gear mechanism being operably coupled to at least one of the internal combustion engine, the first electric motor, and the second electric motor to transmit the driving force;
a first dynamic clutch (28) selectively coupling the first planetary gear mechanism to the second planetary gear mechanism; and
a brake/clutch (32) selectively coupling the ring gear of at least one of the first planetary gear mechanism and the second planetary gear mechanism,
wherein the multi-mode, power-split hybrid transmission system is configurable to operate in a plurality of modes to transmit driving force to a final drive (26), and wherein the engine (20) is operably coupled to the ring gear of the second planetary gear mechanism (38), the first electric motor (22) is operably coupled to the sun gear of the first planetary gear mechanism (36) , the second electric motor (24) is operably coupled to the sun gear of the second planetary gear mechanism (38),
wherein the first dynamic clutch (28) collocates with the sun gear of the first planetary gear mechanism (36) and the sun gear of the second planetary gear mechanism (38), the brake/clutch which is a third brake/clutch (32), collocates with the ring gear of the first planetary gear mechanism (36), and the carrier of the first planetary gear mechanism (36) outputs to the final drive (26),
**characterized in that** a second clutch element (30) collocates with the carrier of the first planetary gear mechanism (36) and the carrier gear of the second planetary gear mechanism (38).

2. The multi-mode, power-split hybrid transmission system according to Claim 1, wherein a fourth brake/clutch element (34) operably coupled with the carrier of the second planetary gear mechanism (38).

## Patentansprüche

1. Leistungsverzweigtes Hybridgetriebesystem mit mehreren Modi, aufweisend:
eine Verbrennungsmaschine (20), der eine Antriebskraft abgibt;
einen ersten Elektromotor (22), der eine Antriebskraft abgibt;
einen zweiten Elektromotor (24), der eine Antriebskraft abgibt;
einen ersten Planetengetriebemechanismus (36) mit einem Träger, einem Hohlrad und einem Sonnenrad, wobei der erste Planetengetriebemechanismus mit mindestens einem von der Verbrennungsmaschine, dem ersten Elektromotor und dem zweiten Elektromotor betriebsfähig gekoppelt ist, um die Antriebskraft zu übertragen;
einen zweiten Planetengetriebemechanismus (38) mit einem Träger, einem Hohlrad und einem Sonnenrad, wobei der zweite Planetengetriebemechanismus mit mindestens einem von der Verbrennungsmaschine, dem ersten Elektromotor und dem zweiten Elektromotor betriebsfähig gekoppelt ist, um die Antriebskraft zu übertragen;
eine erste dynamische Kupplung (28), die selektiv den ersten Planetengetriebemechanismus mit dem zweiten Planetengetriebemechanismus koppelt; und
eine Bremse/Kupplung (32), die selektiv das Hohlrad des ersten Planetengetriebemechanismus und/oder des zweiten Planetengetriebemechanismus koppelt,
wobei das leistungsverzweigte Hybridgetriebesystem mit mehreren Modi so konfiguriert werden kann, dass es in einer Vielzahl von Modi arbeitet, um Antriebskraft auf einen Achsantrieb (26) zu übertragen, und wobei die Maschine (20) betriebsbereit mit dem Hohlrad des zweiten Planetengetriebemechanismus (38) gekoppelt ist, wobei der erste Elektromotor (22) betriebsbereit mit dem Sonnenrad des ersten Planetengetriebemechanismus (36) gekoppelt ist und wobei der zweite Elektromotor (24) betriebsbereit mit dem Sonnenrad des zweiten Planetengetriebemechanismus (38) gekoppelt ist,
wobei die erste dynamische Kupplung (28) mit dem Sonnenrad des ersten Planetengetriebemechanismus (36) und dem Sonnenrad des zweiten Planetengetriebemechanismus (38) zusammenwirkt, wobei die Bremse/Kupplung, die eine dritte Bremse/Kupplung (32) ist, mit dem Hohlrad des ersten Planetengetriebemechanismus (36) zusammenwirkt, und wobei der Träger des ersten Planetengetriebemechanismus (36) an den Achsantrieb (26) abgibt,
**dadurch gekennzeichnet, dass** ein zweites Kupplungselement (30) mit dem Träger des ersten Planetengetriebemechanismus (36) und mit dem Träger des zweiten Planetengetriebemechanismus (38) zusammenwirkt.

2. Leistungsverzweigtes Hybridgetriebesystem mit mehreren Modi nach Anspruch 1, wobei ein viertes Brems-/Kupplungselement (34) betriebsbereit mit dem Träger des zweiten Planetengetriebemechanismus (38) gekoppelt ist.

## Revendications

1. Système de transmission hybride à répartition de puissance multimode comprenant :
un moteur à combustion interne (20) émettant une force d'entraînement ;
un premier moteur électrique (22) émettant une force d'entraînement ;
un second moteur électrique (24) émettant une force d'entraînement ;
un premier mécanisme d'engrenages planétaires (36) ayant un support, une couronne et un planétaire, le premier mécanisme d'engrenages planétaires étant couplé en fonctionnement à au moins l'un du moteur à combustion interne, du premier moteur électrique et du second moteur électrique pour transmettre la force d'entraînement ;
un second mécanisme d'engrenages planétaires (38) ayant un support, une couronne et un planétaire, le second mécanisme d'engrenages planétaires étant couplé en fonctionnement à au moins l'un du moteur à combustion interne, du premier moteur électrique et du second moteur électrique pour transmettre la force d'entraînement ;
un premier embrayage dynamique (28) couplant de façon sélective le premier mécanisme d'engrenages planétaires au second mécanisme d'engrenages planétaires ; et
un frein/embrayage (32) couplant de façon sélective la couronne d'au moins l'un du premier mécanisme d'engrenages planétaires et du second mécanisme d'engrenages planétaires,
dans lequel le système de transmission hybride à répartition de puissance multi-mode peut être configuré pour fonctionner dans une pluralité de modes pour transmettre une force d'entraînement à un entraînement final (26), et dans lequel le moteur (20) est couplé en fonctionnement à la couronne du second mécanisme d'engrenages planétaires (38), le premier moteur électrique (22) est couplé en fonctionnement à la couronne du premier mécanisme d'engrenages planétaires (36), le second moteur électrique (24) est couplé en fonctionnement à la couronne du second mécanisme d'engrenages planétaires (38),
dans lequel le premier embrayage dynamique (28) est colocalisé avec la couronne du premier mécanisme d'engrenages planétaires (36) et la couronne du second mécanisme d'engrenages planétaires (38), le frein/embrayage qui est un troisième frein/embrayage (32) est colocalisé avec la couronne du premier mécanisme d'engrenages planétaires (36), et le support du premier mécanisme d'engrenages planétaires (36) émet vers l'entraînement final (26),
**caractérisé en ce qu'**un second élément d'embrayage (30) est colocalisé avec le support du premier mécanisme d'engrenages planétaires (36) et le support du second mécanisme d'engrenages planétaires (38).

2. Système de transmission hybride à répartition de puissance multimode selon la revendication 1, dans lequel un quatrième élément de frein/embrayage (34) est couplé en fonctionnement au support du second mécanisme d'engrenages planétaires (38).
